# EUROPEAN PATENT APPLICATION

(11) **EP 4 756 266 A1**
(43) Date of publication of application: **10.06.2026**
(21) Application number: 24217886.1
(22) Date of filing: 05.12.2024
(51) Int. Cl.: F16K 3/26, F16K 27/04, F16K 31/143, F16K 31/524, F16K 31/122

(54) **VALVE**

(71) Applicant: Microtecnica S.r.l., 10126 Turin (IT)
(72) Inventor: MORNACCHI, Andrea, 10126 TORINO (IT); QUAGLIA, Enrico, 10023 TORINO (IT); ROMBOLA, Federico, 89862 SNC DRAPIA (IT); CAPPO, Matteo, 10129 TORINO (IT)
(74) Representative: Casalonga

(57) **Abstract**

A valve (1100) includes a fluid inlet (1110), a fluid outlet (1120) and a piston (1140). The piston (1140) is movable between an open position and a closed position to selectively control a flow of fluid between the fluid inlet (1110) and the fluid outlet (1120). The piston (1140) is arranged to prevent the flow of fluid between the fluid inlet (1110) and the fluid outlet (1120) when the piston (1140) is in the closed position. The valve (1100) also includes a manual override cam (1180) that is movable between a first position and a second position. The manual override cam (1180) is arranged to prevent the piston (1140) from being in the closed position when the manual override cam (1180) is in the first position, and allow the piston (1140) to be in the closed position when the manual override cam (1180) is in the second position. The manual override cam (1180) is hollow.

## Description

### Technical Field

This application relates to valves. In particular, this application relates to valves including a manual override cam that can be used to prevent the valve piston from moving.

### Background

In certain applications, e.g. aerospace applications, weight, size and/or performance of components are important factors. These applications may sometimes require the use of valves (e.g. pressure regulated shutoff valves). Therefore, a small, lightweight and high performance valve design is required.

### Summary

The present disclosure provides a valve comprising:
a fluid inlet;
a fluid outlet; and
a piston;
   wherein the piston is movable between an open position and a closed position to selectively control a flow of fluid between the fluid inlet and the fluid outlet; and
   wherein the piston is arranged to (e.g. substantially) prevent the flow of fluid between the fluid inlet and the fluid outlet when the piston is in the closed position;
the valve further comprising a manual override cam;
   wherein the manual override cam is movable between a first position and a second position;
   wherein the manual override cam is arranged to prevent the piston from being in the closed position when the manual override cam is in the first position;
   wherein the manual override cam is arranged to allow the piston to be in the closed position when the manual override cam is in the second position; and
   wherein the manual override cam is hollow.

The manual override cam may be arranged to prevent the piston from being moved into the closed position (e.g. from the open position) when the manual override cam is in the first position.

The manual override cam may be arranged to allow the piston to be moved into the closed position (e.g. from the open position) when the manual override cam is in the second position.

In some examples, the valve is arranged to provide a fluid path between the fluid inlet and the fluid outlet, at least when the piston is in the open position. In some examples, the piston is arranged to allow the flow of fluid between the fluid inlet and the fluid outlet, at least when the piston is in the open position, e.g. along the fluid path. In some examples, the fluid path is arranged in an (e.g. substantially) axial direction.

In some examples, the fluid inlet and fluid outlet are spaced apart in an axial direction. In some examples, the piston is arranged between the fluid inlet and the fluid outlet in the axial direction. In some examples, two or more (e.g. all) of the fluid inlet, the fluid outlet and the piston are coaxial.

In some examples, the piston is arranged to (e.g. substantially) prevent the flow of fluid between the fluid inlet and the fluid outlet by obstructing the fluid path, when the piston is in the closed position. The fluid path may comprise a first portion, a second portion and an interface (e.g. an aperture) arranged between the first portion and the second portion. The piston may be arranged to obstruct the interface between the first portion of the fluid path and the second portion of the fluid path, when the piston is in the closed position.

In some examples, the first portion of the fluid path and the second portion of the fluid path are arranged radially (e.g. spaced apart in a radial direction) with respect to each other. The interface between the fluid path's first portion and second portion may be arranged between the first portion and the second portion in the radial direction. In some examples, the first portion comprises an annular portion. In some examples, the second portion comprises a cylindrical portion. The second portion may be radially inward of the first portion, for instance the cylindrical portion may be radially inward of the annular portion. The interface may be arranged between the annular portion (of the fluid path's first portion) and the cylindrical portion (of the fluid path's second portion).

In some examples, the piston is arranged to move in an axial direction between the open position and the closed position. The piston may be arranged radially inwardly of the second portion of the fluid path, for instance radially inwardly of the cylindrical portion of the fluid path.

In some examples, the piston comprises an annular portion, e.g. the piston may comprise a hollow cylinder, the hollow cylinder comprising an annular portion and two ends. The piston, e.g. the hollow cylinder, may comprise one open and / or one closed end. The annular portion of the piston may comprise a first section, arranged to obstruct the interface between the fluid path's first portion and second portion when the piston is in the closed position. The annular portion of the piston may comprise a second section, comprising one or more apertures. The second section may be arranged to allow fluid to flow between the fluid path's first portion and second portion when the piston is in the open position, for instance via the second portion's aperture(s).

The first section and the second section may be arranged axially (e.g. spaced apart in an axial direction) with respect to each other. The piston may be arranged so that the first section overlaps the interface between the fluid path's first portion and second portion, when the piston is in the closed position. The piston may be arranged so that the second section overlaps the interface between the fluid path's first portion and second portion, when the piston is in the open position. The annular portion of the piston may be arranged radially inwardly of the fluid path's second portion, for instance radially inwardly of the cylindrical portion of the fluid path. Thus, the annular portion of the piston may be arranged radially between the fluid path's first portion and the fluid path's second portion.

The manual override cam may be arranged to axially move the piston from the closed position (e.g. if the piston is in the closed position) to the open position when the manual override cam is moved from the second position to the first position.

The manual override cam may be movable between the first position and the second position by rotating about an axis. The axis of rotation of the manual override cam may extend in a direction that is (e.g. substantially) perpendicular to the direction of the fluid path (e.g. substantially perpendicular to an axial direction, e.g. of the valve). The manual override cam may not be rotationally symmetric around the axis of rotation. Thus, if the piston is in the closed position, rotation about the axis from the second position to the first position may cause the manual override cam to move the piston, e.g. axially, from the closed position to the open position.

In some examples, the valve comprises an axle. The manual override cam may be mounted to the axle such that rotation of the axle moves (rotates) the manual override cam between the first position and the second position. The axle may extend in a direction that is (e.g. substantially) perpendicular to the direction of the fluid path (e.g. substantially perpendicular to an axial direction).

In some examples, the manual override cam comprises a (e.g. first) hole, and the axle is arranged within the (e.g. first) hole. The axle may extend out of one or more of the ends of the (e.g. first) hole. The (e.g. first) hole may extend at least partially through the manual override cam, e.g. the (e.g. first) hole may comprise a through hole. The axle may extend out of both ends of the (e.g. first) hole. The axle may have a cross-section that is not circular, e.g. so as to (e.g. substantially) prevent rotation of the axle relative to the manual override cam (e.g. relative to the hole, e.g. the first hole). The (e.g. first) hole may have (e.g. substantially) the same shape as the axle's cross-section.

In some examples, the manual override cam comprises a (e.g. second) hole configured to receive a fitting (e.g. a screw) to secure the manual override cam to the axle. The (e.g. second) hole may extend in a direction substantially perpendicular to the axle. The (e.g. second) hole may comprise a threaded hole configured to receive a threaded fitting (e.g. a threaded screw). In some examples, the axle comprises a hole (e.g. a through hole) configured to receive the fitting. The manual override cam's (e.g. second) hole may extend into the manual override cam through and beyond the manual override cam's (e.g. first) hole. The (e.g. second) hole may intersect the (e.g. first) hole.

The manual override cam may comprise an extension (e.g. a radial extension), which extends outwards of the manual override cam in a direction that is perpendicular to an axis of rotation of the manual override cam. This extension may be arranged to contact the piston (e.g. at least when the manual override cam is in the first position). This contact between the extension and the piston may help to prevent the piston from being in the closed position when the manual override cam is in the first position. The extension may have a height that is less than a height of the manual override cam (e.g. in a direction parallel to an axis of rotation of the manual override cam).

In some examples, the manual override cam comprises an additive layer manufactured manual override cam, e.g. the manual override cam may be manufactured using additive layer manufacturing. In some examples, the manual override cam comprises (e.g. consists of) metal. For instance, the manual override cam may comprise (e.g. consist of) a (e.g. high-temperature) nickel alloy and/or a (e.g. high temperature) steel alloy. By way of example, the manual override cam may comprise (e.g. consist of) a (e.g. high temperature) Inconel alloy.

In some examples, the manual override cam has a shape that is (e.g. substantially) a portion (e.g. a sector) of a hemisphere.

In some examples, the valve is a pressure regulated shutoff valve. In some examples, the valve comprises a reference chamber. The piston may be configured to move from the open position to the closed position when a pressure of fluid at the fluid outlet is greater than a pressure of fluid in the reference chamber. The piston may be configured to move from the open position to the closed position when the pressure of fluid at the fluid outlet is less than the pressure of fluid in the reference chamber, unless movement of the piston into the closed position is prevented by positioning of the manual override cam in the first position.

The piston may comprise an end portion. The end portion may be at one axial end of the piston, e.g. proximal to the manual override cam. The end portion may comprise a surface having a first face and a second face. The first face (of the surface of the end portion) may define a surface of the reference chamber. The second face (of the surface of the end portion) may define a surface of the fluid path (e.g. a surface of the second portion of the fluid path), for instance the second face (of the surface of the end portion) may define a closed end of the cylindrical portion of the fluid path.

The piston may be configured to move from the open position to the closed position when a force exerted on the second face (of the surface of the end portion) is greater than a force exerted on the first face (of the surface of the end portion), unless movement of the piston into the closed position is prevented by positioning of the manual override cam in the first position. The piston may be configured to move from the closed position to the open position when a force exerted on the first face (of the surface of the end portion) is greater than a force exerted on the second face (of the surface of the end portion).

In some examples, the manual override cam occupies part of the reference chamber. The manual override cam may substantially fill the reference chamber when the piston is in the closed position. For instance, the manual override cam may occupy 70% or more, 80% or more or 90% or more of the volume of the reference chamber when the piston is in the closed position.

The disclosure extends to a pressure regulation system comprising the valve (e.g. the pressure regulated shutoff). The pressure regulation system may comprise a second valve (e.g. a second pressure regulated shutoff). The second valve may be arranged in series with the (e.g. first) valve. The second valve may be similar to the (e.g.) first valve. Any (e.g. all) of the features of the (e.g. first) valve may apply equally to the second valve.

In some examples, the pressure regulation system comprises a pressure setting valve operable to selectively provide a flow path between the (e.g. first) valve's reference chamber and a fluid at a reference pressure. The pressure setting valve may be a one-way valve.

In some examples, the pressure regulation system comprises a dump valve, configured to selectively provide a flow path between the (e.g. first) valve's reference chamber and a vent pressure. The dump valve may be a two-way valve. The vent pressure may be below an (e.g. expected) pressure at the fluid outlet of the (e.g. first) valve such that the piston (e.g. is expected to) move(s) from the open position to the closed position when the (e.g. first) valve's reference chamber is connected to the dump valve.

In some examples, the pressure regulation system is a bleed air pressure regulation system for an aircraft anti-icing system. The pressure regulation system may comprise an inlet arranged to receive bleed air from an aircraft's engine. The pressure regulation system may comprise an outlet arranged to provide bleed air to a component of the aircraft (e.g. the aircraft's engine nacelle), e.g. so as to prevent the build of or remove ice from the component of the aircraft.

The present disclosure extends to an aircraft comprising the pressure regulation system (e.g. comprising the bleed air pressure regulation system for an aircraft anti-icing system).

The present disclosure also provides a method of manufacturing a manual override cam for a valve, the method comprising:
forming a hollow manual override cam, wherein the forming of the hollow manual override cam comprises additive layer manufacturing.

The method may comprise manufacturing the hollow manual override cam described in any of the examples disclosed herein. Thus, any (e.g. all) of the features of the manual override cam described herein may be formed during the method of manufacturing the manual override cam.

The method may comprise using additive layer manufacturing to form the manual override cam with an internal cavity. The method may comprise forming (e.g. using additive layer manufacturing or subsequent machining) one or more holes (e.g. at least two holes) extending through one or more of the walls of the manual override cam to the internal cavity, e.g. so as to create a fluid path between the internal cavity and the outside of the manual override cam.

The method may comprise de-powdering the manual override cam after the additive layer manufacturing process. For example, the method may comprise de-powdering the internal cavity via the one or more holes.

The method may comprise sealing the one or more holes in the manual override cam, e.g. after the de-powdering process. Sealing the one or more holes may comprise laser welding of the one or more holes.

The method may comprise forming (e.g. during additive layer manufacturing or subsequent machining of the manual override cam) a (e.g. first) hole in the manual override cam. The (e.g. first) hole may be a through hole. The (e.g. first) hole may be arranged to receive an axle.

The method may comprise forming (e.g. during additive layer manufacturing or subsequent machining of the manual override cam) a (e.g. second) hole in the cam. The (e.g. second) hole may be in a direction that is perpendicular to the direction of the (e.g. first) hole. The (e.g. second) hole may be arranged to intersect the (e.g. first) hole. The (e.g. second) hole may be arranged to receive a fitting (e.g. a screw). The (e.g. second) hole may be a threaded hole. The method may comprise applying a thread to the (e.g. second) hole. In examples in which the (e.g. second) hole is threaded, the thread may be formed at the same time as the (e.g. second) hole is formed, or subsequently.

The method extends to a method of manufacturing a valve comprising the manual override cam, wherein the method comprises assembling the valve.

For instance, the method may extend to manufacturing (e.g. assembling) any of the valves described herein. Thus, any (e.g. all) of the features of the valves described herein may be present in the valve that is manufactured (e.g. assembled) using this method. Any (e.g. all) of the features of the valves (e.g. the features of the components of the valves) described herein may be formed during this method, although some of the features of the valve's components may be formed by one or more other (e.g. preceding ) processes.

The method may comprise assembling the manual override cam with an axle. For instance, the method may comprise assembling the manual override cam with an axle by locating the axle within the (e.g. first) hole. Assembling the manual override cam with the axle may comprise locating a fitting (e.g. a screw) within the (e.g. second) hole, e.g. so as to fix the relative positions of the axle and the manual override cam.

The method may (e.g. also) comprise locating the fitting within a hole (e.g. a through hole) in the axle, e.g. so as to fix the relative positions of the axle and the manual override cam. The method may comprise forming this hole (e.g. through hole) in the axle, e.g. in a direction perpendicular to a length of the axle and / or in a direction perpendicular to an axis of rotation of the cam about the axle.

The method may comprise forming (e.g. by casting and / or machining) a valve body.

The method may comprise forming (e.g. by machining) a piston. The method may comprise forming the piston from a bar of material. The method may comprise machining the piston from a bar of material, e.g. using a computer numerically controlled (CNC) lathe.

Features of any aspect, embodiment or example described herein may, wherever appropriate, be applied to any other aspect, embodiment or example described herein. Where reference is made to some examples, it should be understood that these are not necessarily distinct examples but may overlap.

### Brief Description of Drawings

One or more non-limiting examples will now be described, by way of example only, and with reference to the accompanying figures in which:
Figure 1 shows a pressure regulation system comprising two pressure regulated shutoff valves arranged in series;
Figure 2 shows a cross section of one of the pressure regulated shutoff valves shown in Figure 1;
Figure 3 shows a comparison between the pressure regulated shutoff valve shown in Figure 2 and another pressure regulated shutoff valve;
Figure 4 shows a manual override cam used in the pressure regulated shutoff valve shown in Figure 2;
Figure 5 shows another view of the manual override cam shown in Figure 4;
Figure 6 shows a cross-sectional view of the manual override cam shown in Figures 4 and 5; and
Figure 7 shows a method of manufacturing the valve shown in Figure 2.

### Detailed Description

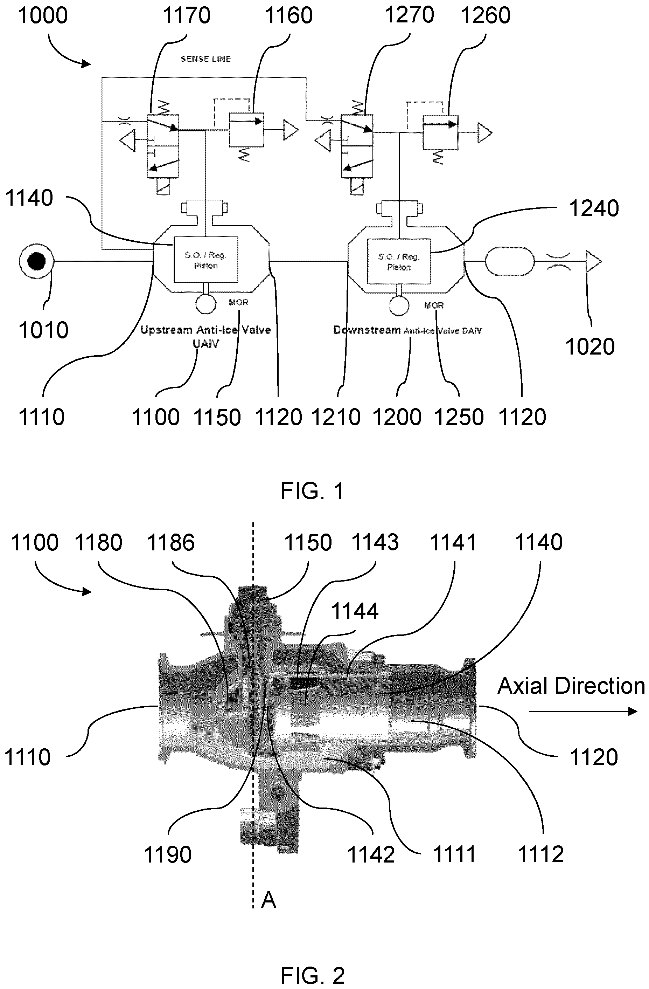

Figure 1 shows a pressure regulation system 1000 which includes a first valve 1100 and a second valve 1200. In this example, both the first valve 1100 and the second valve 1200 are single piston pressure regulated shutoff valves (PRSOVs). In some examples, the first valve 1100 or the second valve 1200 may be of a different type (e.g. either or both of the first valve 1100 and the second valve 1200 may be double piston valves).

The pressure regulation system 1000 has an inlet 1010 and an outlet 1020. The pressure regulation system 1000 is configured to receive a fluid at the inlet 1010 and selectively provide fluid at the outlet 1020. The first valve 1100 and the second valve 1200 are arranged in series between the pressure regulation system's 1000 inlet 1010 and outlet 1020.

In this example, the pressure regulation system 1000 is installed on an aircraft to provide a bleed air pressure regulation system for an aircraft anti-icing system. The pressure regulation system is configured to receive bleed air at the input 1010 from the aircraft's engine, e.g. the engine's compressor. The pressure regulation system is configured to selectively provide bleed air at the outlet 1020. The bleed air provided at the outlet 1020 may be used to prevent the build-up of ice or to de-ice a component of the aircraft, e.g. the aircraft's engine nacelle.

The first valve 1100 has an inlet 1110, an outlet 1120 and a shutoff regulating piston 1140. The shutoff regulating piston 1140 is arranged between the first valve's inlet 1110 and outlet 1120. The first valve's inlet 1110 is configured to receive fluid (e.g. bleed air) from the pressure regulation system's inlet 1010.

The first valve's shutoff regulating piston 1140 is configured to be positioned in (and selectively moved between) an open position or a closed position. When the shutoff regulating piston 1140 is positioned in the open position, a fluid path is provided between the first valve's inlet 1110 and its outlet 1120. When the shutoff regulating piston 1140 is positioned in the closed position, there is no fluid path between the first valve's inlet 1110 and its outlet 1120. Thus, the first valve's outlet 1120 is arranged to receive fluid (e.g. bleed air) from the inlet 1110 when the first valve's shutoff regulating piston 1140 is positioned in the open position.

The pressure regulation system 1000 includes a first pressure setting valve 1160. The first pressure setting valve 1160 has an outlet connected to a reference chamber within the first valve 1100. The first pressure setting valve 1160 is operable to set the pressure in the first valve's reference chamber to a first reference pressure in order to control operation of the first valve's shutoff regulating piston 1140. More detail about this is provided in the description of Figure 2.

The first valve 1100 includes a manual override 1150. The manual override 1150 is configured to allow manual intervention to force the shutoff regulating piston 1140 into an open position, e.g. in the event of failure of the first valve's shutoff regulating piston 1140 to open.

The pressure regulating system 1000 includes a first dump valve 1170. In this example, the first dump valve 1170 is a three-way solenoid valve, although other types of valve may be used instead. The dump valve 1170 has a supply port, a control port, and a vent port. The supply port is connected to the outlet of the first pressure setting valve, e.g. the first reference pressure. The control port is connected to the first valve's 1100 reference chamber. The vent valve is connected to the atmosphere, e.g. a relatively low ambient pressure. The dump valve 1170 can be operated in either an open position or a closed position. The first dump valve 1170 is biased to operate in a normally open state so as to allow fluid to flow between the supply port and the control port, thus setting the pressure of the reference chamber to the first reference pressure. The first dump valve 1170 is configured to change to a closed state in response to a signal to close the valve 1170. When the signal to close the valve 1170 is received, the first dump valve 1170 is configured to change to the closed state, and the control port is connected to the vent port, thus fluid (e.g. air) from the first valve's reference chamber is vented to the ambient environment. This causes the first valve's shutoff regulating piston 1140 to move into the closed position. This prevents the flow of fluid (e.g. bleed air) from the pressure regulating system's inlet 1010 to its outlet 1020.

As previously mentioned, the second valve 1200 is arranged in series with the first valve 1100. In this example, the second valve 1200 is similar to the first valve 1100, although in other examples they may be dissimilar.

The second valve 1200 has an inlet 1210, an outlet 1220 and a shutoff regulating piston 1240. The shutoff regulating piston 1240 is arranged between the second valve's inlet 1210 and outlet 1220. The second valve's inlet 1210 is configured to receive fluid (e.g. bleed air) from the first valve's outlet 1120. Hence, the second valve 1200 is described as being downstream of the first valve 1100.

The second valve's shutoff regulating piston 1240 is configured to be positioned in (and selectively moved between) an open position or a closed position. When the shutoff regulating piston 1240 is positioned in the open position, a fluid path is provided between the second valve's inlet 1210 and its outlet 1220. When the shutoff regulating piston 1240 is positioned in the closed position, there is no fluid path between the second valve's inlet 1210 and its outlet 1220. Thus, the second valve's outlet 1220 is configured to receive fluid (e.g. bleed air) from the inlet 1210 when the second valve's shutoff regulating piston 1240 is operated in the open position.

The pressure regulation system 1000 includes a second pressure setting valve 1260. The second pressure setting valve 1260 has an outlet connected to a reference chamber within the second valve 1200. The second pressure setting valve 1260 is operable to set the pressure in the first valve's reference chamber to a second reference pressure in order to control operation of the second valve's shutoff regulating piston 1240.

In this example, the first reference pressure and the second reference pressure have (e.g. approximately) the same value. However, in other examples they may be different.

The second valve 1200 includes a manual override 1250. The manual override 1250 is configured to allow manual intervention to force the shutoff regulating piston 1240 into an open position, e.g. in the event of failure of the second valve's shutoff regulating piston 1240 to open.

The pressure regulating system 1000 includes a second dump valve 1270. In this example, the second dump valve 1270 is a three-way solenoid valve, although other types of valve may be used instead. The second dump valve 1270 is biased to operate in a normally open state, and is configured to change to a closed state in response to a signal to close the valve 1270. When the signal to close the valve 1170 is received, the second dump valve 1270 is configured to change to the closed state, fluid (e.g. air) from the second valve's reference chamber is vented to the ambient environment, causing the second valve's shutoff regulating piston 1240 to move into the closed position. This prevents the flow of fluid (e.g. bleed air) from the pressure regulating system's inlet 1010 to its outlet 1020.

When both the shutoff regulating pistons 1140, 1240 of the first and second valves 1100, 1200 are operated in an open position, a fluid path is provided between the pressure regulation system's inlet 1010 and its outlet 1020. In this example, the pressure regulation system 1000 is configured so that a fluid path is (e.g. only ever) provided from the inlet 1010 to the outlet 1020 when the pressure at the inlet 1020 exceeds the pressure at the outlet 1020. Thus, the pressure regulation system 1000 is configured to provide a one-way flow of fluid (e.g. bleed air) from the pressure regulation system's inlet 1010 towards the pressure regulation system's outlet 1020 when both the first 1140 and the second 1240 shutoff regulating pistons are operated in an open position.

If either of the first valve's shutoff regulating piston 1140 or the second valve's shutoff regulating piston 1240 experiences a fault that causes it to fail, the faulty shutoff regulating piston 1140 or 1240 can be forced into an open position by the manual override 1150, and the other shutoff regulating piston 1140, 1240 can operate as normal. Thus, some redundancy is provided by having two valves 1100, 1200 in series.

In various other examples, a second valve 1200 is not necessarily used. For instance, the outlet 1120 of the first valve 1100 may be connected to the pressure regulating system's outlet 1020 (e.g. instead of the inlet 1210 of the second valve 1200).

While in this example the second valve 1200 is similar to the first valve 1100, in other examples, the second valve 1200 may be different from the first valve 1100.

Figure 2 shows a cross-section of an example of the first valve 1100. As previously mentioned, in this example the second valve 1200 is similar to the first valve 1100. Hence, any (e.g. all) of the features of the first valve 1100 may apply equally to the second valve 1200.

Figure 2 shows: the first valve's inlet 1110, the first valve's outlet 1120, the first valve's shutoff regulating piston 1140, and the first valve's manual override 1150. Also shown is the first valve's reference chamber 1190 as well as an axle 1186 and a manual override cam 1180, which are both components of the first valve's manual override 1150.

The piston 1140 has a closed end 1142 and an open end. An annular portion of the piston 1140 is arranged between the open end and the closed end 1142. The annular portion of the piston 1140 has a first section 1141 and a second section 1143. The second section 1143 includes several apertures 1144 in the annular wall of the piston. The first section 1141 does not include any apertures in the piston's annular wall. As can be seen in Figure 2, the piston 1140 is arranged within a cylindrical portion 1112 of the fluid path. An annular portion 1111 of the fluid path is arranged radially outwards of the cylindrical portion 1112 of the fluid path.

In Figure 2, the first valve's shutoff regulating piston 1140 is in the closed position, and therefore prevents the flow of fluid (e.g. bleed air) from the inlet 1110 to the outlet 1120. When the piston 1140 is in the closed position, the first portion 1141 of the annular section of the piston 1140 obstructs an interface between the radial portion 1111 and the cylindrical portion 1112 of the first valve's fluid path. When the piston 1140 is in the open position, fluid is able to flow along the fluid path via the apertures 1144 in the piston's annular wall.

The first valve's shutoff regulating piston 1140 is configured to move from the closed position to the open position when the pressure at the outlet 1120 is less than the pressure in the reference chamber 1190. As mentioned with reference to Figure 1, the pressure of the reference chamber 1190 may be set to the first reference pressure.

When the pressure in the reference chamber 1190 is greater than the pressure at the valve's outlet, a force exerted by the fluid (e.g. air) within the reference chamber 1190 on one surface of the closed end 1142 of the piston 1140 is greater than the force exerted by the fluid (e.g. bleed air) at the valve's outlet 1120 on the other surface of the closed end 1142 of the piston 1140. This force imbalance results in the movement of the piston 1140 in the axial direction.

The first valve's shutoff regulating piston 1140 is configured to move from the open position to the closed position when the pressure at the outlet 1120 is greater than the pressure in the reference chamber 1190. This occurs because the force exerted by the fluid (e.g. bleed air) at the outlet 1120 on one surface of the closed end 1142 of the piston 1140 is greater than the force exerted by the fluid (e.g. air) in the reference chamber 1190 on the other surface of the piston's closed end 1142.

Selection of an appropriate first reference pressure may mitigate the risk of fluid (e.g. bleed air) flowing in the wrong direction (e.g. from the pressure system's outlet 1020 to its inlet 1010).

Only providing fluid (e.g. bleed air) from the pressure regulation system's inlet 1010 to the outlet 1020 when the pressure at the outlet is relatively low (e.g. sufficiently low for there to be a risk of ice forming) may improve the efficiency of the pressure regulation system 1000, and in particular the efficiency of fluid usage (e.g. bleed air usage).

The pressure regulation system 1000 is configured such that when the first dump valve 1170 is actuated, the pressure in the reference chamber 1190 is set to a low pressure that forces the shutoff regulating piston 1140 into a closed position.

In this example, actuation of the manual override 1150 causes a rotation of the axle 1186 about an axis "A". The manual override cam 1180 is mounted to the axle 1186, and therefore rotation of the axle 1186 causes a rotation of the manual override cam 1180 (about the axis "A"). As the manual override cam 1180 is not rotationally symmetric about this axis "A", this rotation results in a movement of the manual override cam 1186, that pushes the closed end 1142 of the piston 1140 in an axial direction into the open position. The axis "A" of rotation of the axle 1186 (and therefore the axis "A" of rotation of the manual override cam 1180) extends in a direction that is perpendicular to the (axial) direction of the first valve's fluid path. This perpendicular direction is referred to as a radial direction (as it extends radially outwards from the fluid path).

Thus, it will be understood that the first valve 1100 is configured so that actuation of the manual override 1150 (i.e. rotation of the manual override cam 1180 about the axis "A") from a second position, shown in Figure 2, to a first position moves the first valve's shutoff regulating piston 1140 in an axial direction (which is shown in Figure 2) from the closed position to the open position (and / or prevents the piston from moving into the closed position if it is already in the open position).

The reference chamber 1190 has a certain volume. Part of the reference chamber's volume is occupied by the manual override cam 1180. Providing the manual override cam 1180 within the reference chamber may allow a smaller valve design than designs that have a manual override cam provided outside of the reference chamber.

The remainder of the volume of the reference chamber 1190 (known as the dead volume) is configured to be filled with fluid (e.g. air). Fluid has an associated inertia, and therefore there is some resistance to movement of the first valve's shutoff regulating piston 1140 provided by the volume of fluid (e.g. air) in the reference chamber 1190. A reduction in the volume of the fluid in the reference chamber 1190 (e.g. a reduction of the dead volume) can reduce the inertia provided by the fluid (e.g. air), and therefore improve the responsiveness of the first valve 1100 to changes in pressure at the first valve's outlet 1120.

Adding material to partially fill the reference chamber may reduce the dead volume of a reference chamber of a PRSOV. However, in certain applications (such as aerospace applications) it is often important to provide light-weight components. Addition of material to the valve would increase the valve's weight. Therefore, the first valve 1100 has been designed to provide a relatively light-weight and responsive PRSOV without adding material to the first valve 1100 to reduce the dead volume of the reference chamber 1190.

The first valve 1100 shown in Figure 2 has a manual override cam 1180 that is hollow, i.e. there is a (e.g. internal) cavity within the cam 1180. Providing a hollow manual override cam 1180 may allow the cam 1180 to occupy a greater volume of the reference chamber 1190 without adding weight than a solid manual override cam that is the same weight.

The hollow manual override cam 1180 weighs less than a solid manual override cam that occupies the same volume of the reference chamber, and may even weigh less than a solid manual override cam that occupies a smaller volume of the reference chamber.

Using a hollow manual override cam 1180 instead of a solid manual override cam may reduce the dead volume of the reference chamber 1190 without adding weight to the first valve 1100 (and may possibly even achieve a weight reduction of the first valve 1100).

In this example, the manual override cam 1180 is a high-temperature nickel alloy (e.g. a nickel-steel alloy, such as Inconel) manual override cam 1180. Owing to the size, weight and/or tolerance requirements of bleed air pressure regulation systems for aircraft anti-icing systems, it may not be possible to manufacture a hollow manual override cam 1180 for such a system using traditional casting and/or machining methods. The manual override cam 1180 in this example has been manufactured using additive layer manufacturing. Additive layer manufacturing is a suitable manufacturing method for making metallic components which are hollow, however it has not been used previously for this application.

It may be appropriate to use the same material for the body of the first valve 1100 as is used for the manual override cam 1180. This may help mitigate mechanical degradation (e.g. wear) and / or (e.g. chemical) reactions between the manual override cam 1180 and the body of the first valve 1100. Similarly, it may be appropriate to use the same material for the piston 1140 as the material that is used for the body of the first valve 1100 and / or the manual override cam 1180. In this example, the piston 1140, the manual override cam 1180 and the body of the first valve 1100 are all made from the same material. The material used is a high-temperature nickel alloys (e.g. a nickel-steel alloy, such as Inconel).

As the manual override cam 1180 is hollow, it has a sufficient height to allow for at least twice the minimum wall thickness of the cam 1180 and a hollow portion (e.g. between the manual override cam's 1180 top and bottom wall). The reference chamber 1190 is designed to accommodate the manual override cam 1180, and therefore has a height that is at least the same height as the manual override cam 1180. This may require the reference chamber 1190 to have a greater minimum height than if a solid manual override cam were used.

A reference chamber 1190 with a greater height would normally result in the reference chamber 1190 having a larger dead volume. However, as previously explained, the use of a hollow manual override cam 1180 may enable a reduction of the reference chamber's dead volume while maintaining (or reducing) the overall weight of the first valve 1100. Thus, the applicant has appreciated the counterintuitive benefit that it is possible to reduce the dead volume of the reference chamber 1190 by increasing its volume (e.g. to enable the use of a hollow manual override cam 1180) without needing to comprise on the weight of the valve 1100.

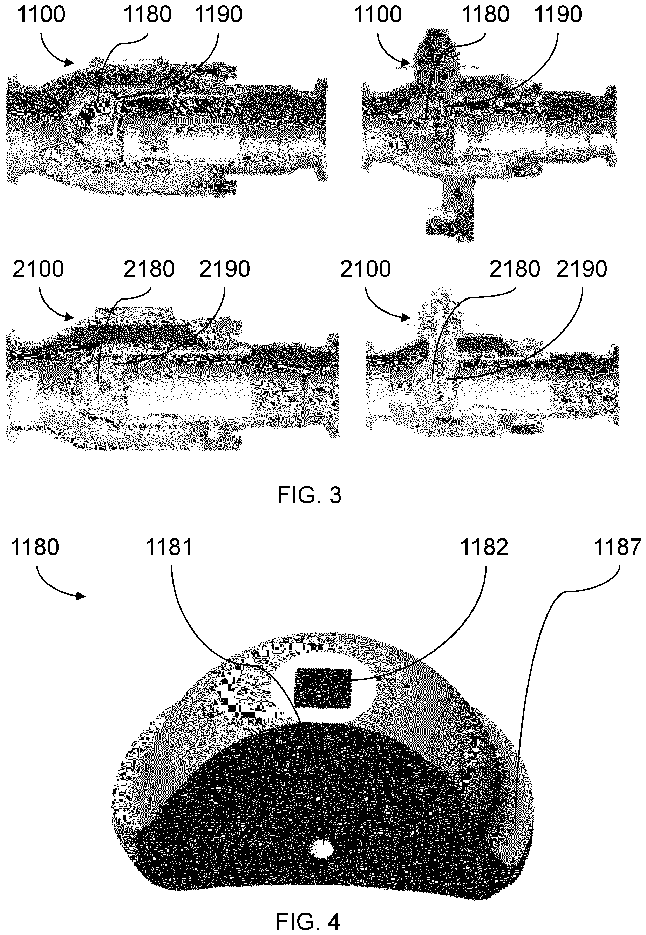

Figure 3 shows a comparison between the first valve 1100 and another valve 2100 which uses a solid manual override cam 2180.

As can be seen in Figure 3, the total volume of the reference chamber 1190 of the first valve 1100 is larger than the total volume of the reference chamber 2190 of the other valve 2100. However, despite this, the dead volume of the reference chamber 1190 of the first valve 2100 is smaller than the dead volume of the reference chamber 2190 of the other valve 2100. This is because the hollow manual override cam 1180 of the first valve 1100 occupies a larger portion of the volume of the first valve's reference chamber 1190 than the portion of the other valve's reference chamber 2190 occupied by the solid manual override cam 2180. In this example, the weight of the first valve 1100 is less than the weight of the other valve 2100.

When compared with a solid manual override cam, such as the solid manual override cam 2180 shown in Figure 3, the first valve's manual override cam 1180 may also have improved thermal properties. The reduced fill may mitigate thermals transients across the first valve's manual override cam 1180 (when compared with a solid cam). Reduced thermal transients may result in improved durability and/or performance.

The first valve's manual override cam 1180 has a shape that is substantially the same as a hemisphere comprising a cut-out portion. This shape may be referred to as a portion (e.g. a sector) of a hemisphere. Owing to the manual override cam 1180 having this shape, only the top of the reference chamber 2190 may need to be redesigned to accommodate the hollow cam 1180 (e.g. when redesigning a valve that has previously been designed to have a solid cam with a flat profile, such as the other valve 2100 shown in Figure 3).

Figure 4 shows the first valve's manual override cam 1180. The manual override cam has a substantially hemispherical shape and includes a through hole 1182, which in this example has a square cross-section.

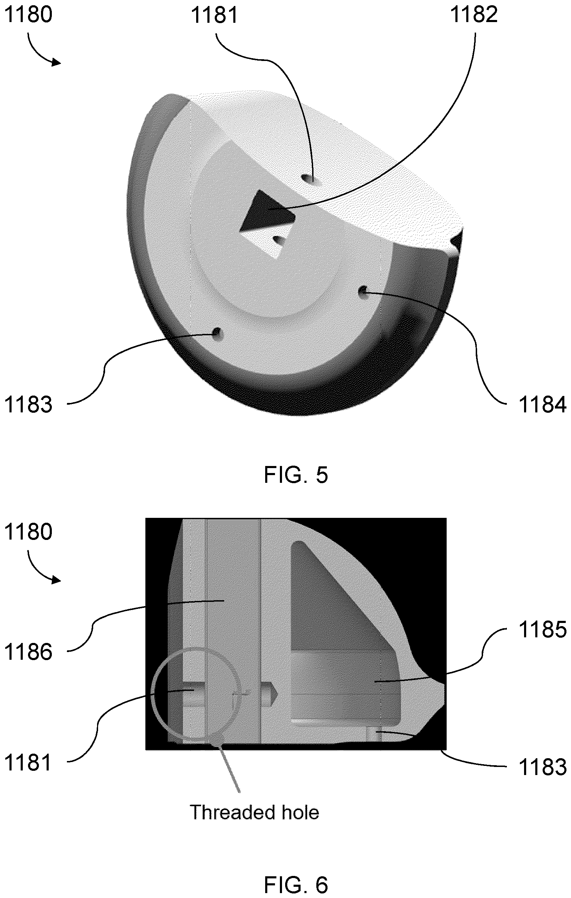

The through hole 1182 is provided to allow the manual override system's axle 1186 to pass through the manual override cam 1180. The through hole 1182 has a cross-section corresponding to the cross section of the axle 1186. The manual override cam 1180 also includes a threaded hole 1181, that can be used to secure the manual override cam 1180 to the axle 1186. As can be seen in Figure 5, in this example the threaded hole 1181 extends through and beyond the hole 1182 for receiving the axle 1186.

In this example, both the cross-section of the through hole 1182 and the axle 1186 are square. A square cross-section does not allow rotation of the axle 1186 relative to the hole 1182. Other cross-sections of the axle 1186 and the through hole 1182 could also achieve this benefit (e.g. a triangular cross-section).

The manual override cam 1180 has a radial extension 1187, in the form of a lip. The radial extension is used to contact the piston 1140, and has the same profile as the edge of the (previously used) solid manual override cam 2190. Owing to the fact that the radial extension 1187 has the same profile as the (previously used) solid manual override cam 2190, modifying the previous design of valve 2100 to accommodate the manual override cam 1180 may be easier than if a radial extension 1187 were not used.

Figure 5 shows another view of the manual override cam 1180. Holes 1183, 1184 on the base of the manual override cam 1180 are produced during the additive layer manufacturing process to enable de-powdering of the inside of the manual override cam 1180. These holes 1183 1184 are sealed using laser welding after de-powdering of the cam 1180. It may be preferable to provide two or more holes 1183, 1184, for instance to allow fluid to flow through the manual override cam 1180 during the de-powdering process.

Figure 6 shows a cross-sectional view of the manual override cam 1180 shown in Figures 4 and 5. In this Figure, the manual override cam 1180 is assembled with the manual override system's axle 1186, which is used to rotate the manual override cam 1180 about the axis "A". A screw has been fitted in the threaded hole 1181, through a hole in the axle 1186, to secure the manual override cam 1180 to the axle 1186. A cavity 1185 within the manual override cam 1180 can also be seen in this Figure which (as previously mentioned) is connected to the outside of the manual override cam 1180 by through holes 1183 and 1184.

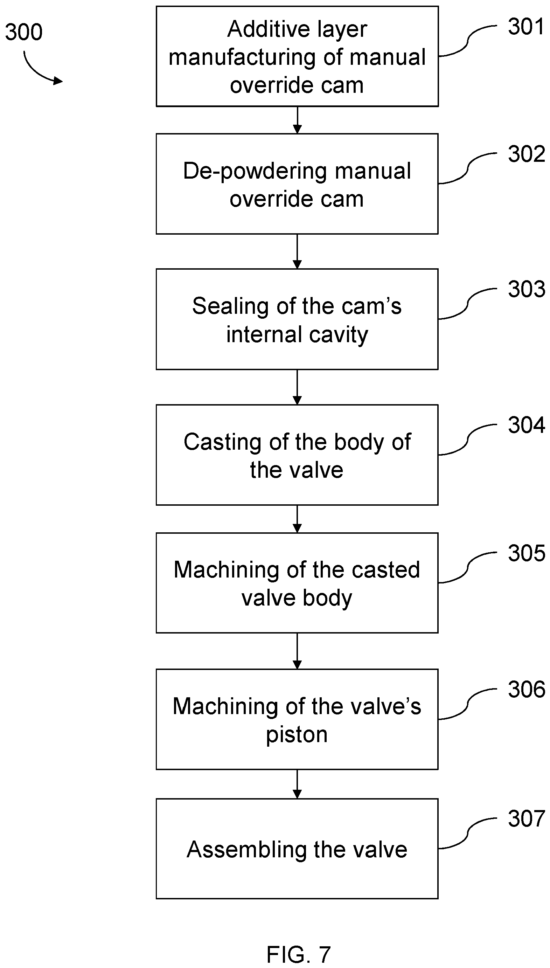

Figure 7 shows a method 300 of manufacturing the valve 1100 shown in Figure 2. The method 300 includes a first step 301 of manufacturing the manual override cam 1180 by additive layer manufacturing. In this example, the manual override cam 1180 is manufactured with holes 1183 and 1184 provided between the outer wall of the cam 1180 and its interior cavity 1185 to facilitate de-powdering.

The method 300 includes a second step 302 of de-powdering the manual override cam 1180 (e.g. using water and/or air to remove the powder from the interior and / or exterior of the cam 1180).

The method includes a third step 303 of laser welding the holes 1183, 1184 closed to seal the cam's interior cavity 1185. It will be appreciated that the holes 1183, 1184 may be sealed using various other manufacturing processes.

The method 300 includes a fourth step 304 of casting the body of the valve 1100. Casting is a relatively accurate and inexpensive manufacturing method. However, casting may not be sufficiently accurate to provide all of the valve body's features (e.g. the cylindrical portion of the valve's fluid path 1112) to the required degree of accuracy. Therefore, the method 300 includes a fifth step 305 of machining any required features (e.g. the cylindrical portion of the valve's fluid path 1112) into the body of the valve 1110.

The method 300 includes a sixth step 306, which is to machine the piston 1140. It is preferable to machine the piston 1140 in order to achieve the required dimensional tolerances when manufacturing this component of the valve 1100. In this example, the piston 1140 is machined from a bar of material, e.g. using a computer numerically controlled (CNC) lathe.

The method 300 includes a seventh step 307 of assembling the valve 1100 (e.g. assembling the cam 1180, the piston and the valve body). This step 307 includes assembling the cam 1180 with the axle 1186, and so this includes fitting a screw through the cam's threaded hole 1181 through the corresponding hole in the axle 1186. While not shown in Figure 7, in this example the method 300 also comprises forming the through hole through the axle 1186 to receive the screw.

It will be appreciated by those skilled in the art that this disclosure has been illustrated by describing one or more specific examples thereof, but is not limited to these examples; many variations and modifications are possible, within the scope of the accompanying claims.

## Claims

1. A valve comprising:
a fluid inlet;
a fluid outlet; and
a piston;
wherein the piston is movable between an open position and a closed position to selectively control a flow of fluid between the fluid inlet and the fluid outlet; and
wherein the piston is arranged to prevent the flow of fluid between the fluid inlet and the fluid outlet when the piston is in the closed position;
the valve further comprising a manual override cam;
wherein the manual override cam is movable between a first position and a second position;
wherein the manual override cam is arranged to prevent the piston from being in the closed position when the manual override cam is in the first position;
wherein the manual override cam is arranged to allow the piston to be in the closed position when the manual override cam is in the second position; and
wherein the manual override cam is hollow.

2. The valve as claimed in claim 1, wherein the valve comprises a reference chamber;
wherein the piston is configured to move from the open position to the closed position when the pressure of fluid at the fluid outlet is less than the pressure of fluid in the reference chamber, unless movement of the piston into the closed position is prevented by positioning of the manual override cam in the first position; optionally
wherein the piston is configured to move from the open position to the closed position when a pressure of fluid at the fluid outlet is greater than a pressure of fluid in the reference chamber.

3. The valve as claimed in claim 2, wherein the manual override cam occupies part of the reference chamber.

4. The valve as claimed in claim 3, wherein the manual override cam substantially fills the reference chamber when the piston is in the closed position.

5. The valve as claimed in any of claims 2 to 4, wherein the valve is arranged to provide a fluid path between the fluid inlet and the fluid outlet, at least when the piston is in the open position;
wherein the fluid comprises a first portion, a second portion and an interface arranged between the first portion and the second portion;
wherein the piston is arranged to prevent the flow of fluid between the fluid inlet and the fluid outlet by obstructing the interface, when the piston is in the closed position;
wherein the piston comprises an end portion, the end portion comprising a surface having a first face and a second face;
wherein the first face of the surface of the end portion defines a surface of the reference chamber;
wherein the second face of the surface of the end portion defines a surface of the second portion of the fluid path;
wherein the piston is configured to move from the open position to the closed position when a force exerted on the second face of the surface of the end portion is greater than a force exerted on the first face of the surface of the end portion, unless movement of the piston into the closed position is prevented by positioning of the manual override cam in the first position; and optionally
wherein the piston is configured to move from the closed position to the open position when a force exerted on the first face of the surface of the end portion is greater than a force exerted on the second face of the surface of the end portion.

6. The valve as claimed in any preceding claim, wherein the valve comprises an axle;
wherein the manual override cam is mounted to the axle such that rotation of the axle moves the manual override cam between the first position and the second position;
wherein the manual override cam comprises a first hole, and the axle is arranged within the first hole;
wherein the axle has a cross-section that is not circular, so as to prevent rotation of the axle relative to the first hole; and optionally
wherein the first hole has the same shape as the axle's cross-section.

7. The valve as claimed in claim 6, wherein the manual override cam comprises a second hole configured to receive a fitting to secure the manual override cam to the axle;
wherein the second hole extends in a perpendicular direction to the axle; and optionally
wherein the axle comprises a hole configured to configured to receive the fitting.

8. The valve as claimed in any preceding claim, wherein the valve is arranged to provide a fluid path between the fluid inlet and the fluid outlet, at least when the piston is in the open position;
wherein the fluid comprises a first portion, a second portion and an interface arranged between the first portion and the second portion;
wherein the piston is arranged to prevent the flow of fluid between the fluid inlet and the fluid outlet by obstructing the interface, when the piston is in the closed position;
wherein the first portion of the fluid path and the second portion of the fluid path are arranged radially with respect to each other; and
wherein the interface between the fluid path's first portion and second portion is arranged between the first portion and the second portion in the radial direction; optionally
wherein the piston is arranged to move in an axial direction between the open position and the closed position.

9. The valve as claimed in claim 8, wherein the first portion comprises an annular portion;
wherein the second portion comprises a cylindrical portion;
wherein the cylindrical portion is radially inward of the annular portion; and
wherein the interface is arranged between the annular portion of the fluid path's first portion and the cylindrical portion of the fluid path's second portion.

10. The valve as claimed in claim 8 or 9, wherein the piston is arranged radially inwardly of the second portion of the fluid path.

11. The valve as claimed in any of claims 8 to 10, wherein the piston comprises a hollow cylinder, the hollow cylinder comprising an annular portion;
wherein the annular portion comprises a first section arranged to obstruct the interface between the fluid path's first portion and the fluid path's second portion when the piston is in the closed position; and
a second section arranged to allow fluid to flow between the fluid path's first portion and second portion when the piston is in the open position; optionally
wherein the second section comprises one or more apertures, and the second section is arranged to allow fluid to flow between the fluid path's first portion and the fluid path's second portion when the piston is in the open position via the second portion's one or more apertures.

12. The valve as claimed in any preceding claim, wherein the manual override cam comprises metal; and/or
wherein the manual override cam comprises an additive layer manufactured manual override cam.

13. A pressure regulation system comprising the valve as claimed in any preceding claim, and a second valve arranged in series with the valve;
wherein the second valve comprises:
a fluid inlet;
a fluid outlet; and
a piston;
wherein the second valve's piston is movable between an open position and a closed position to selectively control a flow of fluid between the second valve's fluid inlet and the second valve's fluid outlet; and
wherein the second valve's piston is arranged to prevent the flow of fluid between the second valve's fluid inlet and the second valve's fluid outlet when the second valve's piston is in the closed position;
the second valve further comprising a manual override cam;
wherein the second valve's manual override cam is movable between a first position and a second position;
wherein the second valve's manual override cam is arranged to prevent the second valve's piston from being in the closed position when the second valve's manual override cam is in the first position;
wherein the second valve's manual override cam is arranged to allow the second valve's piston to be in the closed position when the second valve's manual override cam is in the second position; and optionally
wherein the second valve's manual override cam is hollow.

14. The pressure regulation system as claimed in claim 13, wherein the pressure regulation system is a bleed air pressure regulation system for an aircraft anti-icing system, comprising:
an inlet arranged to receive bleed air from an aircraft's engine;
and an outlet arranged to provide bleed air to a component of the aircraft so as to prevent the build of or remove ice from the component of the aircraft.

15. A method of manufacturing a valve, comprising:
forming a hollow manual override cam, wherein the forming of the hollow manual override cam comprises additive layer manufacturing; and
assembling the valve;
wherein the valve comprises:
the manual override cam;
a fluid inlet;
a fluid outlet; and
a piston;
wherein the piston is movable between an open position and a closed position to selectively control a flow of fluid between the fluid inlet and the fluid outlet; and
wherein the piston is arranged to prevent the flow of fluid between the fluid inlet and the fluid outlet when the piston is in the closed position;
wherein the manual override cam is movable between a first position and a second position;
wherein the manual override cam is arranged to prevent the piston from being in the closed position when the manual override cam is in the first position;
wherein the manual override cam is arranged to allow the piston to be in the closed position when the manual override cam is in the second position.
